# EUROPÄISCHE PATENTANMELDUNG

(11) **EP 2 487 746 A2**
(43) Veröffentlichungstag der Anmeldung: **15.08.2012**
(21) Anmeldenummer: 12155046.1
(22) Anmeldetag: 13.02.2012
(51) Int. Cl.: H01M 10/0525, H01M 4/1395, H01M 4/485, H01M 4/525, H01M 4/1391

(54) **Elektrodenmaterialien und Verfahren zu ihrer Herstellung**

(30) Priorität: 14.02.2011 EP 11154430
(71) Anmelder: BASF SE, 67056 Ludwigshafen (DE)
(72) Erfinder: Schulz-Dobrick, Martin, 68165 Mannheim (DE); Ewald, Bastian, 67061 Ludwigshafen (DE); Hibst, Hartmut, 69198 Schriesheim (DE); Lampert, Jordan Keith, 67063 Ludwigshafen (DE)

(57) **Zusammenfassung**

Verfahren zur Herstellung von Elektrodenmaterialien, dadurch gekennzeichnet, dass man
(a) miteinander vermischt:
(A) Eisen oder mindestens eine Eisenverbindung, in der Fe in der Oxidationsstufe null, +2 oder +3 vorliegt,
(B) Silizium oder mindestens eine Siliziumverbindung, gewählt aus Siliziumhalogeniden, Siliziumcarbid, SiO, Kieselgelen, Kieselsäure und Silanen mit mindestens einer Alkylgruppe oder mindestens einer Alkoxygruppe pro Molekül,
(C) mindestens eine Lithiumverbindung,
(D) mindestens eine Kohlenstoffquelle, die eine separate Kohlenstoffquelle oder gleich mindestens einer Eisenverbindung (A) oder Siliziumverbindung (B) oder Lithiumverbindung (C) sein kann,
(E) gegebenenfalls mindestens ein Reduktionsmittel,
(F) gegebenenfalls mindestens eine Verbindung, die ein von Eisen verschiedenes Metall oder Übergangsmetall der Gruppen 3 bis 13 des Periodensystems der Elemente aufweist,
(G) gegebenenfalls Wasser oder mindestens ein organisches Lösungsmittel,

(b) die so erhaltene Mischung konvektiv trocknet und
(c) bei Temperaturen im Bereich von 400 bis 1200°C thermisch behandelt.

## Beschreibung

Die vorliegende Erfindung betrifft ein Verfahren zur Herstellung von Elektrodenmaterialien, das dadurch gekennzeichnet ist, dass man
(a) miteinander vermischt:
   (A) Eisen oder mindestens eine Eisenverbindung, in der Fe in der Oxidationsstufe null, +2 oder +3 vorliegt,
   (B) Silizium oder mindestens eine Siliziumverbindung, gewählt aus Siliziumhalogeniden, Siliziumcarbid, SiO, Kieselgelen, Kieselsäure und Silanen mit mindestens einer Alkylgruppe oder mindestens einer Alkoxygruppe pro Molekül,
   (C) mindestens eine Lithiumverbindung,
   (D) mindestens eine Kohlenstoffquelle, die eine separate Kohlenstoffquelle oder gleich mindestens einer Eisenverbindung (A) oder Siliziumverbindung (B) oder Lithiumverbindung (C) sein kann,
   (E) gegebenenfalls mindestens ein Reduktionsmittel,
   (F) gegebenenfalls mindestens eine Verbindung, die ein von Eisen verschiedenes Metall oder Übergangsmetall der Gruppen 3 bis 13 des Periodensystems der Elemente aufweist,
   (G) gegebenenfalls Wasser oder mindestens ein organisches Lösungsmittel,
(b) die so erhaltene Mischung konvektiv trocknet und
(c) bei Temperaturen im Bereich von 400 bis 1200°C thermisch behandelt.

Weiterhin betrifft die vorliegende Erfindung Elektrodenmaterialien, die nach dem erfindungsgemäßen Verfahren erhältlich sind. Weiterhin betrifft die vorliegende Erfindung die Verwendung von erfindungsgemäßen Elektrodenmaterialien in elektrochemischen Zellen.

Auf der Suche nach vorteilhaften Elektrodenmaterialien für Batterien, die als leitfähige Spezies Lithium-lonen nutzen, wurden bisher zahlreiche Materialien vorgeschlagen, beispielsweise Lithium-haltige Spinelle, Mischoxide wie beispielsweise lithiierte Nickel-Mangan-Kobalt-Oxide und Lithium-Eisen-Phosphate.

Viele Mischoxide sind empfindlich gegen Oxidation. Außerdem erfordert die Herstellung von Kathodenmaterialien auf der Basis von Mischoxiden und auch Spinellen in der Regel mehrere Stufen: zunächst stellt man durch Fällung eine sogenannte Vorstufe (englisch Precursor) her, beispielsweise ein gemischtes Carbonat oder ein gemischtes Hydroxid. Die Vorstufe wird im nächsten Schritt lithiiert und kalziniert, um das Mischoxid bzw. den Spinell zu erhalten. Danach muss man noch mit Kohlenstoff in einer den elektrischen Strom leitenden Form vermengen, beispielsweise mit Ruß. Dieses Verfahren ist sehr umständlich.
Es besteht also die Aufgabe, ein Verfahren zur Herstellung von Elektrodenmaterialien bereit zu stellen, welches einfach ist, möglichst wenig Stufen erfordert und Zugang zu chemisch unempfindlichen Elektrodenmaterialien liefert. Es bestand weiterhin die Aufgabe, chemisch unempfindliche Elektrodenmaterialien bereit zu stellen, die sich mit möglichst geringem Aufwand herstellen lassen. Weiterhin bestand die Aufgabe, elektrochemische Zellen bereit zu stellen, die insgesamt positive Anwendungseigenschaften aufweisen, beispielsweise einheitliche chemische Zusammensetzung, regelmäßige sphärische Form, geeignete Porositäten, geeignete Leitfähigkeiten und gute Li-lonen Diffusivität.

Dementsprechend wurde das eingangs definierte Verfahren gefunden, im Folgenden auch als erfindungsgemäßes Verfahren bezeichnet.

Zur Durchführung des erfindungsgemäßen Verfahrens vermischt man in Stufe (a) mehrere der Ausgangsmaterialien, vorzugsweise alle beteiligten Ausgangsmaterialien, in mehreren oder vorzugsweise in einem Schritt. Als Gefäße für das Vermischen sind beispielsweise Rührkessel und gerührte Kolben geeignet.

Im Folgenden werden die Ausgangsmaterialien weiter charakterisiert.

Als Ausgangsmaterial (A) wählt man mindestens eine Eisen oder Eisenverbindung, im Folgenden auch Eisenverbindung (A) genannt, in der Eisen, also Fe, in der Oxidationsstufe null, +2 oder +3 vorliegt. Dabei handelt es sich vorzugsweise um anorganische Eisenverbindungen, beispielsweise Eisenoxid wie FeO, Fe₂O₃ oder Fe₃O₄, Eisenhydroxid, beispielsweise Fe(OH)₃, basisches Eisenhydroxid, auch geschrieben als FeOOH, FeCO₃, wasserhaltiges Eisenoxid, auch geschrieben als FeO·aq oder Fe₂O₃·aq, oder wasserlösliche Eisensalze wie beispielsweise FeSO₄, Fe₂(SO₄)₃, Eisen(II)acetat, Eisennitrat, insbesondere Fe(NO₃)₃, Eisenhalogenid, insbesondere Eisen(II)chlorid und Eisen(III)chlorid, Eisenlactat, Eisenacetylacetonat und Eisenpentacarbonyl, weiterhin basisches Eisencarbonat und Eisencitrat. Dabei sollen im Rahmen der vorliegenden Erfindung Carbonsäuresalze von Eisen als anorganische Eisenverbindungen gelten. Im Rahmen der vorliegenden Erfindung sollen auch die jeweiligen Hydratkomplexe, also beispielsweise FeSO_{4·}4 H₂O, FeCl₃·6 H₂O und Fe(C₆H₅O₇)·H₂O subsumiert sein.

In einer Ausführungsform der vorliegenden Erfindung wählt man als Ausgangsmaterial (A) mindestens zwei Eisenverbindungen, von denen mindestens eine, bevorzugt mindestens zwei Fe in der Oxidationsstufe +2 oder +3 aufweist.

In einer Ausführungsform der vorliegenden Erfindung wählt man als Ausgangsmaterial (A) mindestens drei Eisenverbindungen, von denen alle Fe in der Oxidationsstufe +2 oder +3 aufweisen.

In einer anderen Ausführungsform der vorliegenden Erfindung wählt man als Ausgangsmaterial (A) genau eine Eisenverbindung, in Fe in der Oxidationsstufe +2 oder +3 vorliegt, insbesondere +3.

Ausgangsmaterial (A) kann man beispielsweise als wässrige Lösung, als wässrige Suspension oder als Pulver einsetzen, beispielsweise als Pulver mit einem mittleren Partikeldurchmesser im Bereich von 50 nm bis 750 nm, bevorzugt im Bereich von 100 bis 500 nm (Zahlenmittel). in einer anderen Ausführungsform setzt man Ausgangsmaterial (A) als wässrige Suspension ein, wobei der mittlere Partikeldurchmesser der suspendierten Partikel im Bereich von 50 nm bis 750 nm, bevorzugt im Bereich von 100 bis 500 nm (Zahlenmittel) liegt.

In einer Ausführungsform der vorliegenden Erfindung wählt man als Ausgangsmaterial (A) eine Mischverbindung, in der Fe und mindestens ein Metall M vorliegen, beispielsweise Fe_{1-y}M_{y}O (mit zweiwertigem M), Fe_{1-y}M_{y}O_{1+y/2} (mit dreiwertigem M), Fe_{1-y}M_{y}O_{1+y} (mit vierwertigem M), Fe_{1-y}M_{y}CO₃ (mit zweiwertigem M) oder Fe_{1-y}M_{y}CO₃(OH)_{y} (mit dreiwertigem M).

Als Ausgangsmaterial (B) wählt man Silizium oder mindestens eine Siliziumverbindung, im Folgenden auch Siliziumverbindung (B) genannt, gewählt aus Silanen mit mindestens einer Alkylgruppe oder mindestens einer Alkoxygruppe pro Molekül, Siliziumhalogeniden, Siliziumoxiden, Siliziumcarbid und Kieselsäure. Bevorzugte Silane sind solche der allgemeinen Formel (I)

Si(R¹)ᵣ(X¹)ₛHₜ (I)

wobei die Variablen wie folgt gewählt sind:
- R¹: kann verschieden sein oder gleich und ist gewählt aus Phenyl und vorzugsweise C₁-C₁₀-Alkyl, cyclisch oder linear, beispielsweise Methyl, Ethyl, n-Propyl, iso-Propyl, n-Butyl, iso-Butyl, sec.-Butyl, tert.-Butyl, n-Pentyl, Cyclopentyl, iso-Amyl, iso-Pentyl, n-Hexyl, isoHexyl, Cyclohexyl, und 1,-3-Dimethylbutyl, bevorzugt n-C₁-C₆-Alkyl, besonders bevorzugt Methyl, Ethyl, n-Propyl, iso-Propyl und ganz besonders bevorzugt Methyl oder Ethyl. Wenn ein Stoff mehrere Alkoxygruppen pro Mol aufweist, so kann R¹ verschieden sein oder vorzugsweise gleich und gewählt aus den vorstehend genannten C₁-C₆-Alkylresten.
- X¹: kann verschieden sein oder gleich und wird gewählt aus Halogen, Phenoxygruppen und Alkoxygruppen, bevorzugt der Formel OR¹, insbesondere Methoxy und Ethoxy, und wobei Halogen bevorzugt Brom und besonders bevorzugt Chlor ist,
- r, s: sind gewählt aus ganzen Zahlen im Bereich von null bis 4,
- t: ist gewählt aus ganzen Zahlen im Bereich von null bis 3,
wobei gilt: r + s + t = 4, und wobei
mindestens eine der Ungleichungen
r ≠ 0
s ≠ 0
erfüllt ist.

In einer Ausführungsform der vorliegenden Erfindung wählt man Siliziumverbindung (B) aus Verbindungen der allgemeinen Formel Si(OR¹)₄, wobei R¹ verschieden oder vorzugsweise gleich sein kann und gewählt aus Phenyl und C₁-C₁₀-Alkyl, besonders bevorzugt sind Si(OCH₃)₄ und Si(OC₂H₅)₄.

Als Kieselsäure kann man beispielsweise Orthokieselsäure oder deren Salze wählen, beispielsweise Wasserglas, insbesondere Natriumwasserglas, Kaliumwasserglas und insbesondere Lithiumwasserglas. Unter dem Begriff Siliziumoxide sind im Rahmen der vorliegenden Erfindung auch wasserhaltige Siliziumoxide, SiO₂-Gele und SiO₂-Sole subsumiert.

In einer Ausführungsform der vorliegenden Erfindung wählt man Siliziumverbindung (B) aus SiO, SiO₂-Gelen und SiO₂-Kolloiden, letztere werden im Rahmen der vorliegenden Erfindung auch als kolloidale Lösungen bezeichnet.

SiO₂-Gele, SiO₂-Sole und SiO₂-Kolloide sind keine Verbindungen mit definierter Stöchiometrie, sollen aber bei gleichen physikalischen Eigenschaften jeweils als eine Verbindung betrachtet werden.

In einer Ausführungsform der vorliegenden Erfindung wählt man als Ausgangsmaterial (B) zwei oder mehr Siliziumverbindungen (B). In einer anderen Ausführungsform der vorliegenden Erfindung wählt man genau eine Siliziumverbindung (B).

Als Ausgangsmaterial (C) wählt man mindestens eine Lithiumverbindung, auch Lithiumverbindung (C) genannt, vorzugsweise mindestens eine anorganische Lithiumverbindung. Beispiele für geeignete anorganische Lithiumverbindungen sind Lithiumhalogenide, beispielsweise Lithiumchlorid, weiterhin Lithiumsulfat, Lithiumacetat, Lithiumsilikate, beispielsweise Lithiumorthosilikat, Lithiummetasilikat, Lithiumwasserglas, weiterhin LiOH, Li₂CO₃, Li₂O und LiNO₃; bevorzugt sind Lithiumsilikate, Li₂SO₄, LiOH, Li₂CO₃, Li₂O und LiNO₃. Dabei kann Lithiumverbindung Kristallwasser enthalten, beispielsweise LiOH · x H₂O, insbesondere LiOH · H₂O.
In einer speziellen Ausführungsform der vorliegenden Verbindung wählt man als Siliziumverbindung (B) und Lithiumverbindung (C) jeweils Lithiumsilikat oder Lithiumwasserglas, d.h., Lithiumsilikat bzw. Lithiumwasserglas können jeweils gleichzeitig als Siliziumverbindung (B) und als Lithiumverbindung (C) dienen.

Als Ausgangsmaterial (D) wählt man mindestens eine Kohlenstoffquelle, kurz auch Kohlenstoffquelle (D) genannt, die eine separate Kohlenstoffquelle oder gleich mindestens einer Eisenverbindung (A) oder Siliziumverbindung (B) oder Lithiumverbindung (C) sein kann.

Unter einer separaten Kohlenstoffquelle (D) soll im Rahmen dieser Erfindung verstanden werden, dass ein weiteres Ausgangsmaterial eingesetzt wird, das gewählt wird aus elementarem Kohlenstoff in einer Modifikation, die den elektrischen Strom leitet, oder eine Verbindung, die im Rahmen der thermischen Behandlung in Schritt (c) zu Kohlenstoff zersetzt wird und die von Eisenverbindung (A) und Siliziumverbindung (B) und Lithiumverbindung (C) verschieden ist.

Als Kohlenstoffquelle (D) ist beispielsweise Kohlenstoff in einer Modifikation, die den elektrischen Strom leitet, geeignet, also beispielsweise Ruß, Graphit, Graphen, expandierter Graphit, Kohlenstoff-Nanoröhren oder Aktivkohle.

Als Kohlenstoffquelle (D) sind weiterhin Verbindungen von Kohlenstoff geeignet, die bei der thermischen Behandlung in Schritt (c) zu Kohlenstoff zersetzt werden. Beispielsweise sind synthetische und natürliche Polymere, unmodifiziert oder modifiziert, geeignet. Beispiele für synthetische Polymere sind Polyolefine, beispielsweise Polyethylen und Polypropylen, weiterhin Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Weiteres geeignetes synthetisches Polymer ist Polyvinylalkohol.

Als Kohlenstoffquelle (D) geeignete natürliche Polymere sind beispielsweise Oligo-und Polysaccharide, insbesondere Stärken, beispielsweise Maisstärke und Kartoffelstärke, und Zellulose. Weitere geeignete natürliche Polymere sind pflanzliche, tierische Verdickungs- und Geliermittel: Gelatinen, Collagene, Alginate (z. B. Agar-Agar), Pektine, Gummi arabicum, Oligo-und Polysaccharide, Guarkernmehl und Johannisbrotkernmehl. Auch sind Amylose und Amylopektin geeignet.

Geeignet sind auch modifizierte natürliche Polymere. Darunter seien durch polymeranaloge Umsetzung modifizierte natürliche Polymere verstanden. Geeignete polymeranaloge Umsetzungen sind insbesondere die Veresterung und die Veretherung. Bevorzugte Beispiele für modifizierte natürliche Polymere sind mit Methanol veretherte Stärke, acetylierte Stärke, Acetylcellulose, phosphatierte Stärke und sulfatierte Stärke.

Weiterhin sind schwerflüchtige niedermolekulare organische Verbindungen als Kohlenstoffquelle (D) geeignet. Geeignet sind insbesondere solche Verbindungen, die bei Temperaturen im Bereich von 400 bis 1200°C nicht verdampfen, sondern sich zersetzen, beispielsweise als Feststoff oder in der Schmelze. Beispiele sind Dicarbonsäuren, beispielsweise Phthalsäure, I-sophthalsäure, Terephthalsäure, Weinsäure, Zitronensäure, weiterhin Monosaccharide mit 3 bis 7 Kohlenstoffatomen pro Molekül, beispielsweise Triosen, Tetrosen, Pentosen, Hexosen und Heptosen, sowie Kondensate von Monosacchariden, beispielsweise Di-, Tri-, Oligo- und Polysaccharide, insbesondere Lactose, Glucose und Fructose.

Weitere Beispiele für niedermolekulare organische Verbindungen als Kohlenstoffquelle (D) sind Harnstoff sowie seine schwerer flüchtigen Kondensate Biuret, Melamin, Melam (N2-(4,6-diamino-1,3,5-triazin-2-yl)-1,3,5-triazin-2,4,6-triamin) und Melem (1,3,4,6,7,9,9b-Heptaazaphenalen-2,5,8-triamin).

Weitere Beispiele für Kohlenstoffquellen (D) sind Salze, bevorzugt Eisen-, Ammoniumsalze und Alkalimetallsalze, besonders bevorzugt Eisen-, Ammonium- oder Lithiumsalze, von organischen Säuren, beispielsweise Acetate, Propionate, Lactate, Citrate, Tartrate, Acetylacetonate, Benzoate, Butyrate. Besonders bevorzugte Beispiele sind Ammoniumacetat, Lithiumammoniumtartrat, Lithiumhydrogentartrat, Kaliumnatriumtartrat, Lithiumhydrogentartrat, Lithiumammoniumtartrat, Lithiumtartrat, Lithiumcitrat, Ammoniumcitrat, Eisenacetat, Lithiumacetat oder Lithiumlactat.

In einer Ausführungsform der vorliegenden Erfindung wählt man mindestens zwei Kohlenstoffquellen (D), beispielsweise Zucker und Stärke, oder Stärke und mindestens ein Polyolefin, oder Zucker und Eisenlactat und mindestens ein Polyolefin. Durch die Wahl von mindestens zwei Kohlenstoffquellen (D) kann man in vielen Fällen eine verbesserte Morphologie von erfindungsgemäß hergestelltem Elektrodenmaterial erreichen.

In einer speziellen Ausführungsform der vorliegenden Verbindung wählt man als Kohlenstoffquelle (D) und Lithiumverbindung (C) jeweils Lithiumacetat, Lithiumlactat oder Lithiumhydrogentartrat, d.h. Lithiumverbindung (C) Lithiumacetat, Lithiumlactat bzw. Lithiumhydrogentartrat können jeweils gleichzeitig als Kohlenstoffquelle (D) dienen.

In einer speziellen Ausführungsform der vorliegenden Erfindung wählt man als Kohlenstoffquelle (D) und Siliziumverbindung (B) jeweils Siliziumcarbid (SiC) oder ein Silan mit mindestens einem organischen Substituenten, d.h. Siliziumcarbid bzw. Silan mit mindestens einem organischen Substituenten kann gleichzeitig als Kohlenstoffquelle (D) und als Siliziumverbindung (B) dienen.

In einer speziellen Ausführungsform der vorliegenden Erfindung wählt man als Kohlenstoffquelle (D) und Eisenverbindung (A) jeweils Eisenacetat, Eisenacetylacetonat, Eisenlactat oder Eisentartrat, d.h. die Eisenverbindung (A) Eisenacetat, Eisenlactat oder Eisentartrat kann gleichzeitig als Kohlenstoffquelle (D) dienen.

Als Ausgangsmaterial (E) kann man weiterhin ein Reduktionsmittel einsetzen, kurz auch Reduktionsmittel (E) genannt. Als Reduktionsmittel (E) kann man gasförmige, flüssige oder feste Substanzen einsetzen, die unter den Bedingungen von Schritt (a) oder (c) Eisen, soweit erforderlich, in die Oxidationsstufe +2 überführen.

In einer Ausführungsform der vorliegenden Erfindung wählt man als festes Reduktionsmittel (E) ein Metall, beispielsweise Nickel oder Mangan.

Als gasförmige Reduktionsmittel (E) kann man beispielsweise Wasserstoff oder Kohlenmonoxid einsetzen.

In einer Ausführungsform der vorliegenden Erfindung wählt man ein natürliches oder synthetisches Polymer, welches gleichzeitig als Kohlenstoffquelle (D) und als Reduktionsmittel (E) dienen kann, beispielsweise Polyvinylalkohol.

In einer Ausführungsform der vorliegenden Erfindung wählt man als Eisenverbindung (A), Siliziumverbindung (B) oder Lithiumverbindung (C) eine Verbindung, die gleichzeitig als Reduktionsmittel (E) dienen kann.

In einer speziellen Ausführungsform der vorliegenden Erfindung wählt man als Siliziumverbindung (B) und Reduktionsmittel (E) jeweils SiO, d.h. Siliziumverbindung (B) SiO kann gleichzeitig als Reduktionsmittel (E) dienen.

4 LiOH + 2 Fe³⁺OOH + 1Si²⁺O + 1 SiO₂ → 2 Li₂FeSi⁴⁺O₄ + 3 H₂O

Setzt man Eisen oder Eisenpentacarbonyl als Reduktionsmittel und Eisenquelle ein, so lautet die Gleichung beispielsweise

2 LiOH + 1/3 Fe⁰ + 2/3 Fe³⁺ + SiO₂ → Li₂FeSiO₄+ H₂O

In einer Ausführungsform der vorliegenden Erfindung setzt man kein bei Zimmertemperatur gasförmiges Reduktionsmittel (E) ein.

In einer Ausführungsform der vorliegenden Erfindung setzt man kein Reduktionsmittel (E) ein.

Als Ausgangsmaterial (F) kann man mindestens eine weitere Verbindung einsetzen, die ein von Eisen verschiedenes Metall oder Übergangsmetall der Gruppen 3 bis 13 des Periodensystems der Elemente aufweist, kurz auch Verbindung (F) genannt.

In einer Ausführungsform der vorliegenden Erfindung wählt man Verbindung (F) aus Übergangsmetallverbindung (F) und Aluminiumverbindungen (F). Dabei wählt man als Übergangsmetall vorzugsweise ein oder mehrere Übergangsmetalle aus der ersten Periode der Übergangsmetalle. Besonders bevorzugt wählt man Übergangsmetallverbindung (F) aus Verbindungen von Ti, V, Cr, Mn, Co, Ni, Cu und Zn. Bevorzugt sind weiterhin Aluminiumverbindungen.

Verbindung (F) kann wasserfrei oder wasserhaltig sein. Übergangsmetallkation oder auch Aluminiumkation in Verbindung (F) kann in komplexierter Form vorliegen, beispielsweise als Hydratkomplex, oder unkomplexiert sein.

Bei Verbindung (F) kann es sich um ein Salz handeln, beispielsweise Halogenid, insbesondere Chlorid, weiterhin Nitrat, Carbonat, Sulfat, Oxid, Hydroxid, Acetat, Citrat, Tartrat oder um Salze mit verschiedenen Anionen. Vorzugsweise werden Salze gewählt aus Oxiden, Carbonaten, Hydroxiden und Nitraten, basisch oder neutral. Ganz besonders bevorzugte Beispiele für Verbindungen (F) sind Oxide, Hydroxide und Carbonate.

In einer Ausführungsform der vorliegenden Erfindung kann Verbindung (F) als eine oder die einzige Kohlenstoffquelle (D) wirken, beispielhaft seien Nickelacetat, Kobaltacetat, Zinkacetat und Mangan(II)acetat genannt.

In einer Ausführungsform der vorliegenden Erfindung kann Verbindung (F) als ein oder das einzige Reduktionsmittel (E) wirken. Beispielhaft seien Mangan(II)acetat, MnCO₃, MnSO₄, MnH₂, NiH₂, Mangantartrat und Nickeltartrat genannt.

In einer Ausführungsform der vorliegenden Erfindung kann man in Schritt (a) ein oder mehrere Lösungsmittel zusetzen, beispielsweise ein oder mehrere organische Lösungsmittel (G) und/oder Wasser. Dabei sollen unter organischen Lösungsmitteln (G) solche Stoffe verstanden werden, die bei der Temperatur von Schritt (a) des erfindungsgemäßen Verfahrens flüssig sind und die mindestens eine C-H-Bindung pro Molekül aufweisen.

In einer Variante setzt man Wasser und ein organisches Lösungsmittel (G) zu. Beispiele für geeignete organische Lösungsmittel (G) sind insbesondere halogen-freie organische Lösungsmittel (G) wie Methanol, Ethanol, Isopropanol oder n-Hexan, Cyclohexan, Aceton, Ethylacetat, Diethylether und Diisopropylether.

Bevorzugt ist Wasser.

Ohne dass einer bestimmten Theorie der Vorzug gegeben werden soll, ist es möglich, dass gewisse organische Lösungsmittel (G) wie sekundäre oder primäre Alkanole auch als Reduktionsmittel (E) wirken können.

Außerdem ist es möglich, dass gewisse organische Lösungsmittel zumindest anteilig als Kohlenstoffquelle (D) wirken können.

In einer Ausführungsform der vorliegenden Erfindung kann man beim Vermischen ein oder mehrere Additive zusetzen, beispielsweise ein oder mehrere Tenside, die nichtionisch, anionisch, zwitterionisch oder kationisch sein können. Vorzugsweise setzt man ein oder mehrere nicht-ionische Tenside zu oder ein oder mehrere anionische Tenside, beispielsweise Tenside mit einer oder mehreren Carbonsäuregruppen in Form des Natrium- oder Kaliumsalzes.

Wünscht man kationisches Tensid einzusetzen, so kann man beispielsweise Ammoniumsalze wählten, deren Gegenion Borat, Phosphat oder Sulfat ist. In einer besonderen Ausführungsform setzt man ein oder mehrere nicht-ionische Tenside ein, gewählt aus Mehrfachalkoholen, Mehrfachethern und insbesondere alkoxylierten Alkoholen oder alkoxylierten Aminen, insbesondere mehrfach ethoxylierten Fettalkoholen oder mehrfach ethoxyliertem Ethylendiamin.

Das Vermischen in Schritt (a) kann man beispielsweise Verrühren von einer oder mehreren Suspensionen oder Lösungen der Ausgangsmaterialen (A) bis (D) und gegebenenfalls (E), (F) und (G) durchführen. Möglich ist auch ein Verkneten zu einer Paste. Möglich ist es auch, feste Ausgangsmaterialien miteinander innig zu vermengen, beispielsweise durch gemeinsames Vermahlen, und als Pulver einzusetzen.

In einer Ausführungsform der vorliegenden Erfindung führt man das Vermischen in Schritt (a) bei Temperaturen im Bereich von null bis 200°C durch, bevorzugt führt man es bei Temperaturen im Bereich der Raumtemperatur bis zu 100°C durch, bevorzugt bei maximal 90°C.

In einer Ausführungsform der vorliegenden Erfindung führt man das Vermischen in Schritt (a) bei Normaldruck durch. In anderen Ausführungsformen führt man das Vermischen bei erhöhtem Druck durch, beispielsweise bei 1,1 bis zu 20 bar. In anderen Ausführungsformen führt man das Vermischen in Schritt (a) bei reduziertem Druck durch, beispielsweise bei 10 mbar bis zu 990 mbar.

Das Vermischen in Schritt (a) kann man über einen Zeitraum im Bereich von fünf Minuten bis zu 12 Stunden durchführen, bevorzugt sind 30 Minuten bis vier Stunden, besonders bevorzugt 45 Minuten bis zwei Stunden.

In einer Ausführungsform der vorliegenden Erfindung führt man das Vermischen in Schritt (a) in einer Stufe durch.

In einer anderen Ausführungsform führt man das Vermischen in Schritt (a) in zwei oder mehr Stufen durch. So ist es beispielsweise möglich, zunächst Eisenverbindung (A) und Lithiumverbindung (C) gemeinsam in Wasser zu lösen bzw. zu suspendieren, danach mit Siliziumverbindung (B) und Kohlenstoffquelle (D) zu vermischen und danach gegebenenfalls mit Reduktionsmittel (E) und/oder Verbindung (F) zu vermischen.

Durch Schritt (a) erhält man eine Mischung von mindestens einer Eisenverbindung (A), mindestens einer Siliziumverbindung (B), mindestens einer Lithiumverbindung (C), mindestens einer Kohlenstoffquelle (D), gegebenenfalls Reduktionsmittel (E), gegebenenfalls Verbindung (F) und vorzugsweise Wasser und/oder mindestens einem organischen Lösungsmittel (G) in pastöser Form, als Wasser-haltiges Pulver, als Suspension oder als Lösung.

In einer Ausführungsform der vorliegenden Erfindung setzt man als Additiv mindestens eine Verbindung zu, die zur Bildung einer Vorstufe für ein dotiertes Elektrodenmaterial geeignet ist. Unter dotierten Elektrodenmaterialien sollen solche Elektrodenmaterialien verstanden werden, die bis maximal 3 Atomprozent, bezogen auf gesamten Metallgehalt des jeweiligen erfindungsgemäß hergestellten Elektrodenmaterials, an Metall- oder Nichtmetallatomen aufweist, bevorzugte Nichtmetalle sind Fluor, Phosphor und Bor. Beispiele für geeignete Verbindungen sind Salze und andere Verbindungen der Haupt- und Nebengruppenmetalle, insbesondere deren Fluoride, reaktive Verbindungen der Haupt- und Nebengruppenmetalle, Halbmetalle und Nichtmetalle, insbesondere Titanalkoholate, Metatitansäuren, Borate und Borsäurederivate, insbesondere Boralkoholate, Phosphate und Phosphorsäure.

In Schritt (b) des erfindungsgemäßen Verfahrens trocknet man aus Schritt (a) erhaltene Mischung konvektiv, d.h. man entzieht Flüssigkeiten wie organische Lösungsmittel und Wasser, und man vermischt mechanisch. Das Entziehen von Flüssigkeit kann man beispielsweise durch Anlegen eines verminderten Drucks bewerkstelligen oder vorzugsweise thermisch. Mechanisches Vermischen in Schritt (b) kann man beispielsweise durch Rühren, Mischen in einem Drehrohofen oder Ausbilden einer Wirbelschicht bewerkstelligen.

Beispiele für geeignete Vorrichtungen für Schritt (b) sind konvektive Trockner, insbesondere Pasten-Mahltrockner, Mahltrockner, Stromtrockner, Zyklontrockner, Ringtrockner, Karusselltrockner, Wirbelschichttrockner, Wirbelschicht-Sprühgranulator, Drehrohrtrockner, Umluft-Bandtrockner, Mischertrockner, Schachttrockner, Umluft-Trockenschrank, Flash-Dryer, Spin-Flash Dryer und besonderes bevorzugt Sprühtrockner. Beispiele für Sprühtrockner sind Düsentürme, Scheibentürme und Sprühtrockner mit integriertem Wirbelbett.

Bevorzugt führt man Schritt (b) als Zerstäubungstrocknung oder Sprühtrocknung durch. Die Sprühtrocknung kann man in einem Sprühtrockner, bevorzugt in einem Trockenturm, beispielsweise einem Düsenturm, Scheibenturm, Sprühtrockner mit integriertem Wirbelbett, durchführen. Dazu presst man in einer Variante die in Schritt (a) erhaltene Mischung durch eine oder mehrere Sprüheinrichtungen, beispielsweise durch eine oder mehrere Düsen oder über eine Zerstäuberscheibe in einen Heißluftstrom oder in einen heißen Inertgasstrom, wobei der Heißgasstrom bzw. der heiße Inertgasstrom eine Temperatur im Bereich von 80 bis 500°C haben kann, bevorzugt sind 90 bis 400°C, besonders bevorzugt 120 bis 340°C. Dadurch wird die Mischung innerhalb von Bruchteilen einer Sekunde zu einem Trockengut getrocknet, das vorzugsweise als Pulver anfällt. Das Trockengut kann beispielsweise eine Restfeuchte im Bereich von 0,5 bis 10%, bevorzugt 1 bis 8%, besonders bevorzugt bis 5% aufweisen.

In einer bevorzugten Ausführungsform wählt man die Temperatur des Heißluftstroms bzw. des heißen Inertgasstroms in Schritt (b) so, dass sie oberhalb der Temperatur in Schritt (a) liegt.

In einer Ausführungsform der vorliegenden Erfindung strömt der Heißluftstrom oder der heiße Inertgasstrom in Richtung mit der eingebrachten Mischung aus Schritt (a) (Gleichstromverfahren). In einer anderen Ausführungsform der vorliegenden Erfindung strömt der Heißluftstrom oder heiße Inertgasstrom in Gegenrichtung zur eingebrachten Mischung aus Schritt (a) (Gegenstromverfahren). Die Sprüheinrichtung befindet vorzugsweise sich am oberen Teil des Sprühtrockners, insbesondere des Sprühturms.

Das in Schritt (b) anfallende Trockengut kann man im Anschluss an die eigentliche Sprühtrocknung durch einen Abscheider, beispielsweise einen Zyklon oder einen Filter, vom Heißluftstrom bzw. heißen Inertgasstrom abtrennen.

Das in Schritt (b) anfallende Trockengut kann beispielsweise einen mittleren Partikeldurchmesser (D50, Gewichtsmittel) im Bereich von 1 bis 120 µm aufweisen. Bevorzugt ist dabei, wenn der mittlere Partikeldurchmesser (D90, Gewichtsmittel) bis zu 120 µm beträgt, besonders bevorzugt bis zu 50 µm und ganz besonders bevorzugt bis zu 20 µm.

Schritt (b) kann man absatzweise (diskontinuierlich) oder auch kontinuierlich durchführen.

Im anschließenden Schritt (c) behandelt man das Trockengut aus Schritt (b) thermisch, und zwar bei Temperaturen im Bereich von 350 bis 1200°C, bevorzugt von 400 bis 1000°C, besonders bevorzugt von 450 bis 900°C.

In einer Ausführungsform der vorliegenden Erfindung führt man die thermische Behandlung in Schritt (c) in einem Temperaturprofil mit zwei bis 5, bevorzugt mit drei oder vier Stufen durch. Beispielsweise kann man in einer ersten Stufe eine Temperatur im Bereich von 350 bis 550°C einstellen, in einer zweiten Stufe im Bereich von 500 bis 800°C, wobei die Temperatur höher ist als in der ersten Stufe. Wünscht man eine dritte Stufe durchzuführen, so kann man in der dritten Stufe bei 700 bis 1200°C thermisch behandeln, aber in jedem Falle bei einer Temperatur, die höher ist als in der zweiten Stufe. Die Stufen kann man beispielsweise durch das Einstellen bestimmter Heizzonen erzeugen oder - insbesondere für den Fall, dass man Schritt (c) absatzweise zu betreiben wünscht - durch Fahren eines zeitlichen Temperaturprofils.

Die thermische Behandlung gemäß Schritt (c) kann man beispielsweise in einem Drehrohrofen, einem Pendelreaktor, einem Muffeloffen, einem Pendelreaktor, einem Quarzkugelofen, einem diskontinuierlichen oder kontinuierlichen Kalzinationsofen oder in einem Durchschiebeofen (englisch Roller Hearth Kiln, kurz RHK) durchführen.

Die thermische Behandlung gemäß Schritt (c) kann man beispielsweise in einer schwach oxidierenden Atmosphäre, bevorzugt in inerter oder reduzierender Atmosphäre durchführen. Unter schwach oxidierend wird dabei im Rahmen der vorliegenden Erfindung verstanden, dass Oxidationsmittel in der Atmosphäre sind, beispielsweise geringe Anteile an Sauerstoff, jedoch in so geringen Anteilen, dass sie durch Reduktionsmittel (E) verbraucht werden. Beispiele für inerte Atmosphäre sind Edelgas-, insbesondere Argonatmosphäre und Stickstoffatmosphäre. Beispiele für eine reduzierende Atmosphäre sind Stickstoff oder Edelgase, die 0,1 bis 10 Vol.-% Kohlenmonoxid oder Wasserstoff enthalten. Weitere Beispiele für eine reduzierende Atmosphäre sind Luft oder mit Stickstoff oder mit Kohlendioxid angereicherte Luft, die jeweils mehr mol-% Kohlenmonoxid enthalten als Sauerstoff.

In einer Ausführungsform der vorliegenden Erfindung kann man Schritt (c) über einen Zeitraum im Bereich von 1 Minute bis zu 24 Stunden, bevorzugt im Bereich von 10 Minuten bis 3 Stunden durchführen.

Das erfindungsgemäße Verfahren lässt sich ohne große Staubbelastung durchführen. Durch das erfindungsgemäße Verfahren sind Elektrodenmaterialien mit vorzüglichen rheologischen Eigenschaften zugänglich, die sich als Elektrodenmaterialien eignen und sehr gut verarbeiten lassen. Beispielsweise lassen sie sich zu Pasten mit guten rheologischen Eigenschaften verarbeiten.

Ein weiterer Gegenstand der vorliegenden Erfindung sind Elektrodenmaterialien, enthaltend
(H) Kohlenstoff in einer elektrisch leitfähigen Modifikation und
(I) mindestens eine Verbindung der allgemeinen Formel (I),

Liₓ(Fe_{1-y}M_{y})ₐSiO_{z} (I)

kurz auch Übergangsmetallverbindung (I) genannt, wobei die Variablen wie folgt definiert sind:
- M: gewählt aus von Eisen verschiedenen Metallen und Übergangsmetallen der Gruppen 3 bis 13 des Periodensystems der Elemente, bevorzugt Sc, Al, Ti, V, Cr, Mn, Co, Ni, Cu und Zn, insbesondere Al, Mn, Ni und Co,
- x: eine Zahl im Bereich von 0,1 bis 4, bevorzugt 1 bis 3, besonders bevorzugt 1,5 bis 2,5;
- y: eine Zahl im Bereich von null bis 1, bevorzugt mindestens 0,01;
- z: eine Zahl im Bereich von 2 bis 6, bevorzugt 3 bis 5, besonders bevorzugt 2,5 bis 4,5, und ganz besonders bevorzugt ist z = 4;
- a: eine Zahl im Bereich von 0,1 bis 4, bevorzugt 0,2 bis 2, besonders bevorzugt 0,5 bis 1,5, und ganz besonders bevorzugt ist a = 1.
wobei Kohlenstoff (H) und Verbindung der allgemeinen Formel (I) in Form von agglomerierten Partikeln vorliegen,
wobei Kohlenstoff (H) in den Poren von Sekundärpartikeln von Übergangsmetallverbindung (I) oder in Form von Partikeln vorliegt, die Partikel von Übergangsmetallverbindung (I) punktförmig kontaktieren können, oder als Partikel, die einen oder mehrere Partikel von Kohlenstoff (H) kontaktieren.

In einer Ausführungsform der vorliegenden Erfindung sind in Verbindung der allgemeinen Formel (I) die Variablen
- x: eine Zahl im Bereich von 1 bis 3,
- y: eine Zahl im Bereich von 0,01 bis 1,
- z: eine Zahl im Bereich von 3 bis 5,
- a: eine Zahl im Bereich von 0,2 bis 2,0
und die übrigen Variablen wie vorstehend definiert.

In einer anderen Ausführungsform der vorliegenden Erfindung sind in Verbindung der allgemeinen Formel (I) die Variablen wie folgt gewählt: x = 2, y = 0, a = 1, z = 4.

In einer anderen Ausführungsform der vorliegenden Erfindung sind in Verbindung der allgemeinen Formel (I) die Variablen wie folgt gewählt: x = 2, y=1, a = 1, z = 4 mit M = Mn, Co, Ni, Cu oder Zn, insbesondere Mn, Ni oder Co.

Bei Kohlenstoff in einer elektrisch leitfähigen Modifikation (H), kurz Kohlenstoff, handelt es sich beispielsweise um Ruß, Graphit, Graphen, expandierte Graphite, Carbide, Kohlenstoff-Nanoröhren oder Aktivkohle.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen, Epoxygruppen, Carboxylgruppen und Carbonylgruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoff-Nanoröhren (englisch carbon nanotubes). Kohlenstoff-Nanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Kohlenstoff-Nanoröhren kann man nach an sich bekannten Verfahren herstellen. Beispielsweise kann man eine flüchtige Kohlenstoff-haltige Verbindung wie beispielsweise Methan oder Kohlenmonoxid, Acetylen oder Ethylen, oder ein Gemisch von flüchtigen Kohlenstoff-haltigen Verbindungen wie beispielsweise Synthesegas in Gegenwart von einem oder mehreren Reduktionsmitteln wie beispielsweise Wasserstoff und/oder einem weiteren Gas wie beispielsweise Stickstoff zersetzen. Ein anderes geeignetes Gasgemisch ist eine Mischung von Kohlenmonoxid mit Ethylen. Geeignete Temperaturen zur Zersetzung liegen beispielsweise im Bereich von 400 bis 1000°C, bevorzugt 500 bis 800°C. Geeignete Druckbedingungen für die Zersetzung sind beispielsweise im Bereich von Normaldruck bis 100 bar, bevorzugt bis 10 bar.

Ein- oder mehrwandige Kohlenstoffnanoröhren kann man beispielsweise durch Zersetzung von Kohlenstoff-haltigen Verbindungen im Lichtbogen erhalten, und zwar in Anwesenheit bzw. Abwesenheit eines Zersetzungskatalysators.

In einer Ausführungsform führt man die Zersetzung von flüchtiger Kohlenstoff-haltiger Verbindung bzw. Kohlenstoff-haltigen Verbindungen in Gegenwart eines Zersetzungskatalysators durch, beispielsweise Fe, Co oder bevorzugt Ni.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von Übergangsmetallverbindung (I) und Kohlenstoff (H) im Bereich von 200:1 bis 5:1, bevorzugt 100:1 bis 10:1, besonders bevorzugt 100 : 1.5 bis 20 : 1.

Dabei liegt Kohlenstoff (H) in den Poren von Sekundärpartikeln von Verbindung der allgemeinen Formel (I) oder in Form von Partikeln vor, die Partikel von Verbindung der allgemeinen Formel (I) punktförmig kontaktieren können, oder als Partikel, die einen oder mehrere Partikel von Kohlenstoff (H) kontaktieren.

Darunter ist zu verstehen, dass Partikel von Übergangsmetallverbindung (I) weder vollständig noch partiell mit Kohlenstoff (H) beschichtet sind. Stattdessen kann Kohlenstoff (H) für den Fall, dass Übergangsmetallverbindung (I) in Form von Sekundärpartikeln vorliegt, die agglomerierte Primärpartikel umfassen, in die Poren von Sekundärpartikeln von Übergangsmetallverbindung (I) eingelagert sein, vorzugsweise aber nicht in die Poren von Primärpartikeln von Übergangsmetallverbindung (I).

Vorzugsweise ist es so, dass Partikel von Übergangsmetallverbindung (I) und von Kohlenstoff (H) keine Kontaktflächen aufweisen. Weiterhin ist es so, dass Partikel von Übergangsmetallverbindung (I) und von Kohlenstoff (H) einander auch nicht über Kanten kontaktieren.

Verschiedene Partikel von Kohlenstoff (H) können einander über Kanten, Punkte oder Flächen kontaktieren (berühren) oder überhaupt nicht.

Verschiedene Partikel von Übergangsmetallverbindung (I) können einander über Kanten, Punkte, Flächen, oder überhaupt nicht kontaktieren. Darüber hinaus können sich verschiedene Partikel von Übergangsmetallverbindung (I) durchdringen und/oder miteinander zu Agglomeraten verwachsen sein. Bevorzugt berühren sich verschiedene Partikel von Übergangsmetallverbindung (I) in Agglomeraten mindestens punktförmig und bilden ein kugelähnliches Gerüst.

In einer Ausführungsform der vorliegenden Erfindung liegen Kohlenstoff (H) und Übergangsmetallverbindung (I) in diskreten Partikeln, die einander punktförmig oder gar nicht kontaktieren, nebeneinander vor.

Die vorstehend beschriebene Morphologie von Kohlenstoff (H) und Übergangsmetallverbindung (I) lässt sich beispielsweise durch Lichtmikroskopie, Transmissionselektronenmikroskopie (TEM) oder Rasterelektronenmikroskopie (SEM) nachweisen, außerdem beispielsweise röntgenographisch am Beugungsbild.

In einer Ausführungsform der vorliegenden Erfindung weisen Primärpartikel von Verbindung (I) einen mittleren Durchmesser im Bereich von 1 bis 2000 nm auf, bevorzugt 10 bis 1000 nm, besonders bevorzugt 50 bis 500 nm. Den mittleren Primärpartikeldurchmesser kann man beispielsweise bestimmen durch SEM oder TEM.

In einer Ausführungsform der vorliegenden Erfindung liegt Übergangsmetallverbindung (I) in Form von Partikeln vor, die einen mittleren Partikeldurchmesser im Bereich von 1 bis 150 µm (d50) aufweisen und in Form von Agglomeraten (Sekundärpartikel) vorliegen können. Bevorzugt sind mittlere Partikeldurchmesser (d50) im Bereich von 2 bis 50 µm, besonders bevorzugt im Bereich von 4 bis 30 µm.

In einer Ausführungsform der vorliegenden Erfindung weist Kohlenstoff (H) einen mittleren Primärpartikeldurchmesser im Bereich von 1 bis 500 nm auf, bevorzugt im Bereich von 2 bis 100 nm, besonders bevorzugt im Bereich von 3 bis 50 nm, ganz besonders bevorzugt im Bereich von 4 bis 10 nm.

Dabei werden Partikeldurchmesser im Rahmen der vorliegenden Erfindung bevorzugt als Volumenmittel angegeben, bestimmbar beispielsweise durch Laserbeugung an Dispersionen.

In einer Ausführungsform der vorliegenden Erfindung ist ein Anteil von Kohlenstoff bzw. Kohlenstoff (H) in Poren von Partikeln von Übergangsmetallverbindung (I), insbesondere zwischen Primärpartikeln von Übergangsmetallverbindung (I).

In einer Ausführungsform der vorliegenden Erfindung enthält erfindungsgemäßes Elektrodenmaterial zusätzlich mindestens ein Bindemittel (J), beispielsweise ein polymeres Bindemittel.

Geeignete Bindemittel (J) sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel (J) ist Polybutadien.

Andere geeignete Bindemittel (J) sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel (J) aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln (J) kann es sich um vernetzte oder unvernetzte (Co)polymere handeln.

In einer besonders bevorzugten Ausführungsform der vorliegenden Erfindung wählt man Bindemittel (J) aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel (J) sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

In einer Ausführungsform der vorliegenden Erfindung enthält erfindungsgemäßes Elektrodenmaterial:
im Bereich von 60 bis 98 Gew.-%, bevorzugt 70 bis 96 Gew.-% Übergangsmetallverbindung (I),
im Bereich von 1 bis 25 Gew.-% bevorzugt 2 bis 20 Gew.-% Kohlenstoff (H),
im Bereich von 1 bis 20 Gew.-%, bevorzugt 2 bis 15 Gew.-% Bindemittel (J).

Erfindungsgemäße Elektrodenmaterialien lassen sich gut zur Herstellung von elektrochemischen Zellen verwenden. Beispielsweise lassen sie sich zu Pasten mit guten rheologischen Eigenschaften verarbeiten.

Ein weiterer Gegenstand der vorliegenden Erfindung sind elektrochemische Zellen, hergestellt unter Verwendung von mindestens einer erfindungsgemäßen Elektrode. Ein weiterer Gegenstand der vorliegenden Erfindung sind elektrochemische Zellen, enthaltend mindestens eine erfindungsgemäße Elektrode.

Ein weiterer Aspekt der vorliegenden Erfindung ist eine Elektrode, enthaltend mindestens eine Übergangsmetallverbindung (I), Kohlenstoff (H) und mindestens ein Bindemittel (J).

Verbindung der allgemeinen Formel (I), Kohlenstoff (H) und Bindemittel (J) sind vorstehend beschrieben.

Die Geometrie von erfindungsgemäßen Elektroden kann man in weiten Grenzen wählen. Bevorzugt ist es, erfindungsgemäße Elektroden in dünnen Filmen auszugestalten, beispielsweise in Filmen mit einer Dicke im Bereich von 10 µm bis 250 µm, bevorzugt 20 bis 130 µm.

In einer Ausführungsform der vorliegenden Erfindung umfassen erfindungsgemäße Elektroden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Erfindung ist die Verwendung von erfindungsgemäßen Elektrodenmaterialien bzw. erfindungsgemäßen Elektroden in elektrochemischen Zellen. Ein weiterer Gegenstand der vorliegenden Erfindung ist ein Verfahren zur Herstellung von elektrochemischen Zellen unter Verwendung von erfindungsgemäßem Elektrodenmaterial bzw. von erfindungsgemäßen Elektroden. Ein weiterer Gegenstand der vorliegenden Erfindung sind elektrochemische Zellen, enthaltend mindestens ein erfindungsgemäßes Elektrodenmaterial oder mindestens eine erfindungsgemäße Elektrode.

Erfindungsgemäße Elektroden dienen in erfindungsgemäßen elektrochemischen Zellen definitionsgemäß als Kathoden. Erfindungsgemäße elektrochemische Zellen enthalten eine Gegenelektrode, die im Rahmen der vorliegenden Erfindung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei erfindungsgemäßen elektrochemischen Zellen kann es sich beispielsweise um Batterien oder um Akkumulatoren handeln.

Erfindungsgemäße elektrochemische Zellen können neben Anode und erfindungsgemäßer Elektrode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Erfindung enthalten erfindungsgemäße elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan.

Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (II) und (III) 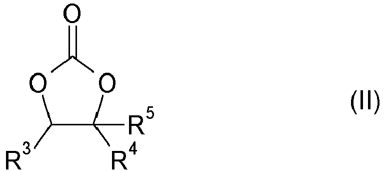 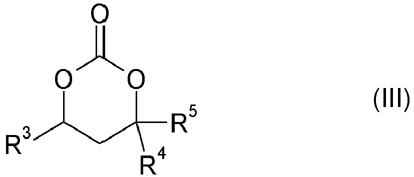 bei denen R³, R⁴ und R⁵ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R⁴ und R⁵ nicht beide tert.-Butyl sind.

In besonders bevorzugten Ausführungsformen ist R³ Methyl und R⁴ und R⁵ sind jeweils Wasserstoff, oder R⁵, R³ und R⁴ sind jeweils gleich Wasserstoff.

Ein anderes bevorzugtes cyclisches organisches Carbonat ist Vinylencarbonat, Formel (IV).

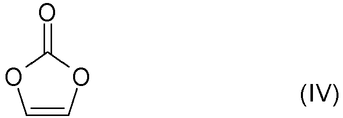

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration.

Erfindungsgemäße elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₘYLi, wobei m wie folgt definiert ist:
m = 1, wenn Y gewählt wird aus Sauerstoff und Schwefel,
m = 2, wenn Y gewählt wird aus Stickstoff und Phosphor, und
m = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform der vorliegenden Erfindung enthalten erfindungsgemäße elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform der vorliegenden Erfindung kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm.

Erfindungsgemäße elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt.

Erfindungsgemäße elektrochemische Zellen liefern eine hohe Spannung und zeichnen sich aus durch eine hohe Energiedichte und gute Stabilität aus.

Erfindungsgemäße elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Erfindung ist die Verwendung von erfindungsgemäßen elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von erfindungsgemäßen elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele erläutert.

### Arbeitsbeispiele

### I. Herstellung eines Elektrodenmaterials

### Schritt (a.1)

Ausgangsmaterialien:
(A. 1): 357,4 g FeOOH
(C.1): 350,4 g LiOH · H₂O mit einem Gehalt von 57,4 Gew.-% LiOH
(B.1): 600,8 g SiO₂ als 40 Gew.-% kolloidale Lösung in Ammoniak-haltigem Wasser, kommerziell erwerblich als Nexsil® 20 NH4
(D.1): 134,9 g Glukose

Zuerst wurden 5,5 l destilliertes Wasser in einem 10-Liter-Doppelmantelrührgefäß mit Ankerrührer vorgelegt und auf 70°C aufgeheizt. Anschließend wurde das LiOH · H₂O (C.1) darin gelöst und dann die Eisenverbindung (A.1) zugegeben. Danach wurde (B.1) zugegeben und mit einem halben Liter Wasser nachgespült. Man heizte unter Rühren auf 90°C auf und rührte eine Stunde bei 90°C (pH-Wert = 11,45). Man erhielt eine Suspension, die LiOH, FeOOH, Glukose und SiO₂ enthielt sowie primäre Reaktionsprodukte.

### Schritt (b.1)

5,5 l der Suspension aus Schritt (a.1) wurde in einem Sprühturm, Typ Niro, nach Programm unter Luft versprüht. Der Heißluftstrom hatte beim Eingang eine Temperatur von 330°C, beim Ausgang noch 110°C. Man versprühte die 5,5 l Suspension innerhalb von 2 Stunden. Man erhielt ein gelbes Pulver.

### Schritt (c.1)

Das Pulver aus Schritt (b.1) wurde in einem absatzweise betriebenen Labordrehrohrofen bei 10 Umdrehungen/Minute unter N₂-Atmosphäre bei 700°C thermisch behandelt. Die Behandlungsdauer betrug eine Stunde. Nach erfolgter thermischer Behandlung ließ man auf Zimmertemperatur abkühlen. Man erhielt erfindungsgemäßes Elektrodenmaterial, enthaltend Übergangsmetallverbindung (I.1 ) und Kohlenstoff (H.1). Kohlenstoff (H.1) und Übergangsmetallverbindung (1.1) lagen, wie durch SEM gezeigt werden konnte, in diskreten Partikeln vor, wobei sich Partikel von Kohlenstoff (H.1) und Übergangsmetallverbindung (I.1) entweder gar nicht oder nur jeweils an einem einzigen Punkt berührten. Partikel von Kohlenstoff (H.1) berührten sich untereinander nach beliebiger Art, Partikel von Übergangsmetallverbindung I.1) lagen separat vor.

### II. Herstellung von erfindungsgemäßen elektrochemischen Zellen

Erfindungsgemäßes Elektrodenmaterial lässt sich mit einem Bindemittel (J), beispielsweise mit Bindemittel (J.1): Copolymer von Vinylidenfluorid und Hexafluorpropen, als Pulver, kommerziell erhältlich als Kynar Flex® 2801 der Fa. Arkema, Inc., wie folgt verarbeiten.

Zur Bestimmung der elektrochemischen Daten der Elektrodenmaterialien werden 8 g erfindungsgemäßes Elektrodenmaterial aus Schritt (c.1) und 1 g (J.1) unter Zusatz von 1 g N-Methylpyrrolidon (N M P) zu einer Paste vermischt. Man beschichtet eine 30 µm dicke Aluminiumfolie mit der vorstehend beschriebenen Paste (Aktivmaterialbeladung 5-7 mg/cm²). Nach Trocknung bei 105°C werden kreisförmige Teile der so beschichteten Aluminiumfolie (Durchmesser 20 mm) ausgestanzt und zu elektrochemischen Testzellen verbaut. Als Elektrolyt wird eine 1 mol/l Lösung von LiPF₆ in Ethylencarbonat/Dimethylcarbonat (1:1 bezogen auf Massenanteile) eingesetzt. Die Anode der Testzellen besteht aus einer Lithiumfolie, die über einen Separator aus Glasfaserpapier zur Kathodenfolie in Kontakt steht.

Man erhält erfindungsgemäße elektrochemische Zellen EZ.1.

Wenn man erfindungsgemäße elektrochemische Zellen zwischen 4 V und 2,5 V bei 25°C in 100 Zyklen zyklisiert (geladen/entladen), und wenn Lade- und Entladeströme 140 mA/g Kathodenmaterial betragen, so kann man die Erhaltung der Entladekapazität nach 100 Zyklen bestimmen.

Erfindungsgemäße elektrochemische Zellen EZ.1 zeigen eine gute Zyklenstabilität.

## Patentansprüche

1. Verfahren zur Herstellung von Elektrodenmaterialien, **dadurch gekennzeichnet, dass** man
(a) miteinander vermischt:
(A) Eisen oder mindestens eine Eisenverbindung, in der Fe in der Oxidationsstufe null, +2 oder +3 vorliegt,
(B) Silizium oder mindestens eine Siliziumverbindung, gewählt aus Siliziumhalogeniden, Siliziumcarbid, SiO, Kieselgelen, Kieselsäure und Silanen mit mindestens einer Alkylgruppe oder mindestens einer Alkoxygruppe pro Molekül,
(C) mindestens eine Lithiumverbindung,
(D) mindestens eine Kohlenstoffquelle, die eine separate Kohlenstoffquelle oder gleich mindestens einer Eisenverbindung (A) oder Siliziumverbindung (B) oder Lithiumverbindung (C) sein kann,
(E) gegebenenfalls mindestens ein Reduktionsmittel,
(F) gegebenenfalls mindestens eine Verbindung, die ein von Eisen verschiedenes Metall oder Übergangsmetall der Gruppen 3 bis 13 des Periodensystems der Elemente aufweist,
(G) gegebenenfalls Wasser oder mindestens ein organisches Lösungsmittel,
(b) die so erhaltene Mischung konvektiv trocknet und
(c) bei Temperaturen im Bereich von 400 bis 1200°C thermisch behandelt.

2. Verfahren nach Anspruch 1, **dadurch gekennzeichnet, dass** man Kohlenstoffquelle (D) wählt aus Aktivkohle, Ruß, Siliziumcarbid, organischen Polymeren und Graphit.

3. Verfahren nach Anspruch 1 oder 2, **dadurch gekennzeichnet, dass** man Eisenverbindung (A) wählt aus FeOOH, Fe₂O₃, Fe₃O₄, Eisenacetat, Eisencitrat, Eisenlactat und Eisencarbonat.

4. Verfahren nach einem der Ansprüche 1 bis 3, **dadurch gekennzeichnet, dass** man Lithiumverbindung (C) wählt aus LiOH, Li₂CO₃, Li₂O, LiNO₃, Li₂SO₄ und Li-Silikaten.

5. Verfahren nach einem der Ansprüche 1 bis 4, **dadurch gekennzeichnet, dass** man Siliziumverbindung (B) wählt aus Si(OR¹)₄, wobei R¹ verschieden oder gleich sein kann und gewählt aus Phenyl und C₁-C₁₀-Alkyl.

6. Verfahren nach einem der Ansprüche 1 bis 4, **dadurch gekennzeichnet, dass** man Siliziumverbindung (B) wählt aus SiO, SiC, SiO₂-Gelen und SiO₂-Kolloiden.

7. Verfahren nach einem der Ansprüche 1 bis 6, **dadurch gekennzeichnet, dass** man die thermische Behandlung in Schritt (c) in einer inerten oder einer reduzierenden Atmosphäre durchführt.

8. Verfahren nach einem der Ansprüche 1 bis 7, **dadurch gekennzeichnet, dass** man Verbindung (F) wählt aus Verbindungen von Al, Ti, V, Cr, Mn, Co, Ni, Cu und Zn.

9. Verfahren nach einem der Ansprüche 1 bis 8, **dadurch gekennzeichnet, dass** man Schritt (b) ausführt als Sprühtrocknen.

10. Elektrodenmaterial, enthaltend
(H) Kohlenstoff in einer elektrisch leitfähigen Modifikation und
(I) mindestens eine Verbindung der allgemeinen Formel (I)
Liₓ(Fe₁-_{y}M_{y})ₐSiO_{z} (I)
wobei die Variablen wie folgt definiert sind:
M gewählt aus von Eisen verschiedenen Metallen und Übergangsmetallen der Gruppen 3 bis 13 des Periodensystems der Elemente,
x eine Zahl im Bereich von 0,1 bis 4,
y eine Zahl im Bereich von null bis 1,
z eine Zahl im Bereich von 2 bis 6,
a eine Zahl im Bereich von 0,1 bis 4,
wobei Kohlenstoff (H) und Verbindung der allgemeinen Formel (I) in Form von agglomerierten Partikeln vorliegen, wobei
Kohlenstoff (H) in den Poren von Sekundärpartikeln von Verbindung der allgemeinen Formel (I) oder in Form von Partikeln vorliegt, die Partikel von Verbindung der allgemeinen Formel (I) punktförmig kontaktieren können, oder als Partikel, die einen oder mehrere Partikel von Kohlenstoff (H) kontaktieren.

11. Elektrodenmaterial nach Anspruch 10, **dadurch gekennzeichnet, dass** die Variablen wie folgt gewählt werden:
x eine Zahl im Bereich von 1 bis 3,
y ist mindestens 0,01,
z eine Zahl im Bereich von 3 bis 5,
a eine Zahl im Bereich von 0,2 bis 2
und die übrigen Variablen wie vorstehend definiert sind.

12. Elektrodenmaterial nach Anspruch 10 oder 11, **dadurch gekennzeichnet, dass** man M wählt aus Al, Sc, Ti, V, Cr, Mn, Co, Ni, Cu und Zn.

13. Elektrodenmaterial nach einem der Ansprüche 10 bis 12, **dadurch gekennzeichnet, dass** Kohlenstoff (H) einen mittleren Partikeldurchmesser im Bereich von 1 bis 500 nm aufweist.

14. Elektrodenmaterial nach einem der Ansprüche 10 bis 13, **dadurch gekennzeichnet, dass** Verbindung der allgemeinen Formel (I) in Form von Partikeln vorliegt, die in Agglomeraten vorliegen können und einen mittleren Partikeldurchmesser im Bereich von 1 bis 150 µm (d50) aufweisen.

15. Verwendung von Elektrodenmaterialien nach einem der Ansprüche 10 bis 14 zur Herstellung von elektrochemischen Zellen.

16. Elektrochemische Zellen, enthaltend mindestens ein Elektrodenmaterial nach einem der Ansprüche 10 bis 14.

17. Verwendung von elektrochemischen Zellen nach Anspruch 16 in Geräten.
